# EUROPÄISCHE PATENTSCHRIFT

(11) **EP 1 999 731 B1**
(45) Veröffentlichungstag und Bekanntmachung des Hinweises auf die Patenterteilung: **28.12.2016**
(21) Anmeldenummer: 07727399.3
(22) Anmeldetag: 27.03.2007
(51) Int. Cl.: G06Q 20/34

(54) **SPEICHERVERWALTUNG VON CHIPKARTEN**
MEMORY MANAGEMENT OF CHIP CARDS
GESTION DE MÉMOIRE DE CARTES À PUCE

(30) Priorität: 28.03.2006 DE 102006014690
(43) Veröffentlichungstag der Anmeldung: 10.12.2008
(73) Patentinhaber: Vodafone Holding GmbH, 40213 Düsseldorf (DE)
(72) Erfinder: DOHMANN, Dierk, 40547 Düsseldorf (DE); FAMULLA, Frank, 40589 Düsseldorf (DE)
(74) Vertreter: Ring & Weisbrodt
(86) Internationale Anmeldenummer: PCT/EP2007/052926
(87) Internationale Veröffentlichungsnummer: WO 2007/110426

(56) Entgegenhaltungen:
- EP-A2- 0 220 718
- WO-A-03/071430
- WOLFGANG RANKL ET AL: "5.5 Speicherorganisation; 5.6 Dateien in der Chipkarte; 5.7 Dateiverwaltung", 1 January 2002 (2002-01-01), HANDBUCH DER CHIPKARTEN : AUFBAU - FUNKTIONSWEISE - EINSATZ VON SMART CARDS, HANSER VERLAG, DE, PAGE(S) 253 - 282, XP008173016, ISBN: 978-3-446-22036-2
- ANONYMOUS: 'ISO/IEC 7816-4: Identification cards - Integrated circuit cards - Part 4: Organization, security and commands for interchange', [Online] 15 Januar 2005, Seiten 1 - 90, XP055187603 Gefunden im Internet: <URL:http://www.embedx.com/pdfs/ISO_STD_781 6/info_isoiec7816-4{ed2.0}en.pdf> [gefunden am 2015-05-06] & INTERNATIONAL ORGANIZATION FOR STANDARDIZATION: 'ISO 7816-4: Interindustry Commands for Interchange', [Online] 04 April 2013, XP055185853 Gefunden im Internet: <URL:http://www.cardwerk.com/smartcards/sma rtcard_standard_ISO7816-4_6_basic_interindu stry_commands.aspx> [gefunden am 2015-04-24]
- ISO: "ISO/IEC 7816-9:2004 IDENTIFICATION CARDS -- INTEGRATED CIRCUIT CARDS -- PART 9: COMMANDS FOR CARD MANAGEMENT", INTERNATIONAL STANDARD ISO/IEC, XX, XX, vol. 7816, no. 9, 11 June 2004 (2004-06-11), pages 1-12, XP008077621,

## Beschreibung

### Technisches Gebiet

Die Erfindung betrifft ein Verfahren zum prozessorgesteuerten Verwalten eines Datenspeichers einer Chipkarte, insbesondere einer SIM-, USIM-, Bank- oder Gesundheitskarte.

Weiterhin betrifft die Erfindung eine Chipkarte, insbesondere einer SIM-, USIM-, Bank- oder Gesundheitskarte, enthaltend einen Chip mit einem Datenspeicher, wobei der Datenspeicher durch ein prozessgesteuertes Speichermanagementsystem verwaltet wird, welches Mittel zur Kennzeichnung von benutztem und unbenutztem Datenspeicher aufweist.

### Stand der Technik

Es sind Chipkarten, insbesondere SIM-Karten, bekannt, die über einen Datenspeicher verfügen. Die Daten des Datenspeichers können ausgelesen und weiterverarbeitet werden. Solche Chipkarten werden beispielsweise bei Banken, Telefon-, oder Mobilfunknetzen und auch Ärzten zur Identifikation und Authentifizierung eingesetzt. Auch als Guthabenkarte werden diese Chipkarten gerne verwendet. Die Speicherverwaltung bei bekannten Chipkarten ist proprietär ausgebildet. Daher sind keine einheitlichen Randbedingungen für das Verhalten der Chipkarten bei speicherrelevanten Aktionen vorhanden. Dies betrifft vor allem die Rückgewinnung von freiem Datenspeicher, wenn dieser durch die Chipkarte freigegeben wurde.

*Die* EP 0220 718 *befasst sich mit einer IC-Karte mit einem wieder beschreibbaren Datenspeicher, bei dem eine neue Datei erzeugt und eine bestehende Datei erweitert werden kann. Zudem erlaubt die IC-Karte einen genauen und schnellen Zugriff auf die Dateien in dem Datenspeicher. Der wieder beschreibbare Datenspeicher ist dabei in eine Vielzahl von Sektoren segmentiert. Eine Steuereinrichtung der IC-Karte steuert die Eingabe und Ausgabe der Daten in bzw. aus dem Speicher. Die Steuereinrichtung enthält eine Einrichtung zum Verkettet der Sektoren entsprechend der Länge der zu speichernden Datei, eine Einrichtung zum Eintragen der Sektorkettendaten in einem vorbestimmten Sektor und eine Einrichtung zum Zugreifen auf eine Datei auf Grundlage der Sektorkettendaten.*

*Die* US 2005 0099 867 A1 *beschäftigt sich mit einer Speichermethode für Chipkarten. Ein Speichermanager kontrolliert die Datenspeicherung auf der Chipkarte, indem eine zufällige Auswahl des Speicherplatzes eine bessere Verseilung der Daten auf dem vorhandenen Speicherplatz der Chipkarte ermöglicht.*

### Offenbarung der Erfindung

Aufgabe der Erfindung ist es, die Datenspeicherkapazität voll auszunutzen und freien Datenspeicher einheitlich schnell freizugeben, um ihn mit Daten belegen zu können.

Erfindungsgemäß wird die Aufgabe durch ein Verfahren zum prozessorgesteuerten Verwalten eines Datenspeichers einer Chipkarte mit den folgenden Verfahrensschritten gelöst:
a) Prüfen der vorhandenen Datenspeicherkapazität des Datenspeichers der Chipkarte,
b) Freigabe von Datenspeicher der Chipkarte für eine Applikation zum Speichern von Daten,
c) Belegen von Datenspeicher der Chipkarte mit Daten und/oder Löschen von Daten in dem Datenspeicher der Chipkarte durch die Applikation,
d) ein Anpassen einer gespeicherten Angabe über die tatsächliche freie Speicherplatzmenge des Datenspeichers der Chipkarte, und
e) ein Neuordnen des Datenspeichers der Chipkarte und ein Zuweisen von freiem Speicherplatz des Datenspeichers der Chipkarte für die Applikation erfolgt,
wobei
zur Verhinderung eines Überlaufs des Datenspeichers eine Bedarfsanfrage bezüglich der Speicherkapazität mit der tatsächlich freien Speicherplatzmenge verglichen wird und, falls der Bedarf kleiner oder gleich der zur Verfügung stehenden Speicherkapazität ist, der Speicher der Applikation zugewiesen werden kann
und
wobei die Angabe bzw. Information über die tatsächlich freie Speicherplatzmenge des Datenspeichers der Chipkarte als Wert an einer fest definierten Speicherstelle des Datenspeichers der Chipkarte abgelegt ist
und wobei
ein Zugriffs-Status des Datenspeichers und/oder von Unterbereichen des Datenspeichers in der fest definierten Speicherstelle des Datenspeichers ablegbar ist, in welcher festgehalten wird, ob die Applikation überhaupt einen Speicherbereich verwenden darf.

Durch das vorgeschlagene Verfahren wird auf eindeutige Weise festgelegt, wie der Speicher einer Chipkarte erfasst und zugewiesen wird. Um Datenspeicher auf einer Chipkarte für Daten und/oder Programme zur Verfügung stellen zu können, muss dieser Datenspeicher verwaltet werden.

*Die Prüfung der Datenspeicherkapazität wird dadurch bestimmt, dass zunächst festgestellt wird, wie hoch die Speichermenge ist, die benötigt wird. Anschließend wird die noch vorhandene Speichermenge ermittelt. Durch den Vergleich von angefragter und vorhandener Speichermenge kann einer Applikation mitgeteilt werden, ob auch noch ausreichender Datenspeicher zur Verfügung steht.*

Bei der Datenverwaltung werden neue Daten gespeichert und alte Daten gelöscht. Dafür ist erforderlich, dass dem Chipkartensystem bekannt ist, wie viel Datenspeicher überhaupt auf der Chipkarte für den jeweiligen Anwendungsfall zur Verfügung steht. Jede Datei, womit nachfolgend auch Programmdateien gemeint sind, besteht aus digitalen Zeichen, die üblicherweise zu geeigneten Blöcken zusammengefasst sind. Einige Dateien, wie z.B. ein Betriebssystem, werden in dem Datenspeicher der Chipkarte praktisch nie verändert. Andere Dateien, wie beispielsweise eine Adressdatei, werden ständig, insbesondere durch Aktualisierung, verändert. Bei den Dateien, die sich verändern, werden je nach Bedarf Datenblöcke gelöscht oder hinzugefügt. Es können aber auch vollständig neue Dateien in den Datenspeicher geschrieben werden. Genauso werden auch ganze Dateien gelöscht. Je nach dem, ob Daten gelöscht oder hinzugefügt wurden, ist der Speicherplatz für andere Daten freizugeben oder als belegt zu deklarieren.

Das vorgeschlagene Verfahren prüft zunächst einmal, wie viel Datenspeicher insgesamt vorhanden ist. Der freie Datenspeicher wird anschließend als nicht belegt deklariert. Wenn eine Anfrage zur Speicherung einer Datei erfolgt, kann sofort festgestellt werden, ob noch genug Datenspeicher für diese Datei zur Verfügung steht. Sollte der Datenspeicher nicht ausreichen, so kann beispielsweise eine Signalisierung erfolgen, dass der noch freie Datenspeicher für die zu speichernde Datei zu gering ist. Das Signal kann von einer anfragenden Applikation aufgenommen und verarbeitet werden. Die Applikation kann dann dem Anwender mitteilen, beispielsweise über eine Anzeige, dass der Datenspeicher für die vorgesehene Speicherung nicht ausreicht. An einer Speicherstelle wird ein Wert für den belegten und/oder freien Datenspeicher gespeichert.

Nachdem die tatsächliche Speicherplatzsituation des Datenspeichers auf der Chipkarte geklärt ist, können nun Daten gelöscht oder hinzugefügt werden. Der nun ermittelte, tatsächliche freie Datenspeicher kann nun für eine neue Belegung verwendet werden. Der Wert für den belegten, beziehungsweise freien Datenspeicher, wird nun an die geänderte Speicherplatzsituation angepasst. Der Datenspeicher wird auf diese Art und Weise den anfragenden Applikationen zugewiesen.

Weiterhin wird die Aufgabe durch eine Chipkarte der eingangs genannten Art gelöst, die Mittel zur Anzeige der aktuellen freien Datenspeicherkapazität aufweist, wobei ferner
- Mittel zum Anpassen einer Angabe über die tatsächliche freie Speicherplatzmenge des Datenspeichers der Chipkarte
- Mittel zum Neuordnen des Datenspeichers der Chipkarte sowie zum Zuweisen von freiem Datenspeicher der Chipkarte für anfragende Applikationen,
- Mittel zum Feststellen der erforderlichen Speichermenge für eine anfragende Applikation, ob noch ausreichender Datenspeicher zur Verfügung steht,
- Mittel zum Feststellen der vorhandenen freien Speichermenge für die anfragende Applikation,
- Mittel zum Vergleichen, ob der Bedarf bezüglich der Speicherkapazität der anfragenden Applikation kleiner oder gleich der zur Verfügung stehenden Speicherplatzmenge ist,
wobei die Angabe bzw. Information über die tatsächlich freie Speicherplatzmenge des Datenspeichers der Chipkarte als Wert an einer fest definierten Speicherstelle des Datenspeichers der Chipkarte abgelegt ist,
und
- Mittel zum Ablegen eines Zugriffs-Status des Datenspeichers und/oder von Unterbereichen des Datenspeichers in der fest definierten Speicherstelle, in welcher festgehalten wird, ob die Applikation überhaupt einen Speicherbereich verwenden darf,
vorgesehen sind.

Anfragen von Applikationen bezüglich des freien Datenspeichers können mit einer solchen Chipkarte bearbeitet werden. Die Datenspeicherverwaltung der Chipkarte kann auf diese Weise jeder internen oder externen Applikation den tatsächlichen Status des Chipkartenspeichers mitteilen.

Diese vorteilhafte Variante des erfindungsgemäßen Verfahrens besteht darin, dass die Information bezüglich des freien Datenspeichers in einer definierten Speicherste des Datenspeichers abgelegt ist. Durch diese Maßnahme wird erreicht, dass eine Applikation, die den freien Datenspeicher anfragt, immer nur auf eine feste Speicherstelle zugreifen muss, um den entsprechenden Wert zu erfahren. Dies spart einer Applikation, welche den verfügbaren Speicherplatz auf einer Chipkarte ermitteln muss,eigene Routinen, die dies vornehmen. Die Applikation muss lediglich die definierte Speicherstelle auslesen, um den noch freien Datenspeicher zu ermitteln.

Eine bevorzugte Ausgestaltung des erfindungsgemäßen Verfahrens zur Verwaltung des Datenspeichers einer Chipkarte ergibt sich ferner dadurch, dass eine Datei, welche durch unterschiedliche Applikationen gleichzeitig genutzt wird, einfach Datenspeicher belegt. Mit entsprechenden Verknüpfungen kann Datei von den Applikationen verwendet werden. Applikationen verwenden häufig ein und dieselbe Datei. Jede Applikation müsste daher diese Datei jeweils separat in dem Datenspeicher der Chipkarte speichern. Damit der Datenspeicher mit identischen Daten jedoch nicht doppelt benutzt wird, wird stattdessen ein Platzhalter verwendet. Dieser Platzhalter sorgt dafür, dass die Applikation immer auf die richtige Datei zugreift. Der Platzhalter verwendet erheblich weniger Datenspeicher, als es die Datei, für die er steht, benötigen würde. Der Platzhalter besteht aus einer Verknüpfung bzw. einem Zeiger, welcher die Applikation mit den tatsächlichen Daten verknüpft. Durch diese Maßnahme wird somit Datenspeicher gespart. Auch der Zugriff wird auf die Datei beschleunigt, da nicht zwischen so vielen Dateien gewählt werden muss.

Gemäß einer weiteren vorteilhaften Ausgestaltung des erfindungsgemäßen Verfahrens wird die freie Datenspeicherkapazität zur aktuellen Anzeige dynamisch erfasst. Die Datenspeicherkapazität kann sich ständig ändern. Damit Applikationen immer die aktuelle freie Datenspeicherkapazität zur Verfügung haben, wird diese dynamisch ermittelt und aktuell angezeigt. Die Anzeige für die Applikation kann auch darin bestehen, dass der Wert in einer definierten Speicherstelle dynamisch aktualisiert wird.

In einer vorteilhaften Ausgestaltung der erfindungsgemäßen Chipkarte ist eine Prozessoreinheit auf der Chipkarte für das Speichermanagementsystem vorgesehen. Diese Maßnahme ermöglicht die Chipkarte autark von anderen Systemen zu betreiben. Die Prozessoreinheit kann schnell den erforderlichen Speicherbedarf ermitteln und die entsprechende Information an eine Applikation, welche Speicher benötigt, weiterleiten. Die Vorgänge laufen weitestgehend unabhängig auf der Chipkarte ab.

Gemäß einer bevorzugten Variante der erfindungsgemäßen Chipkarte ist ein Betriebssystem, welches Anweisungen für das Speichermanagementsystem enthält, im Datenspeicher vorgesehen. Die Anweisungen, die ein Betriebssystem zur Verfügung stellt, können von Applikationen genutzt werden, um die freie Speicherkapazität zu ermitteln. Dabei muss lediglich die Übergabe von Parametern über eine Schnittstelle gewährleistet sein. Dadurch wird vermieden, dass Applikationen eigene Routinen benötigen, um den freien Speicherplatz auf der Chipkarte zu ermitteln. Dies kann durch den einfachen Aufruf einer Anweisung des Betriebssystems durchgeführt werden, die die entsprechenden Werte für die freie Speicherkapazität schließlich liefert.

Weitere Vorteile ergeben sich aus dem Gegenstand der Unteransprüche, sowie den Zeichnungen mit den dazugehörigen Beschreibungen.

### Kurze Beschreibung der Zeichnung

- Fig. 1: zeigt eine erfindungsgemäße Chipkarte, welche in ein Mobilfunkendgerät eingesetzt wird.
- Fig. 2: zeigt in einem Diagramm den Verfahrensablauf entsprechend dem erfindungsgemäßen Verfahren.
- Fig.3: zeigt in einer Prinzipskizze eine erste Speicheraufteilung eines Chipkartenspeichers.
- Fig. 4: zeigt in einer Prinzipskizze eine zweite Speicheraufteilung eines Chipkartenspeichers

### Bevorzugtes Ausführungsbeispiel

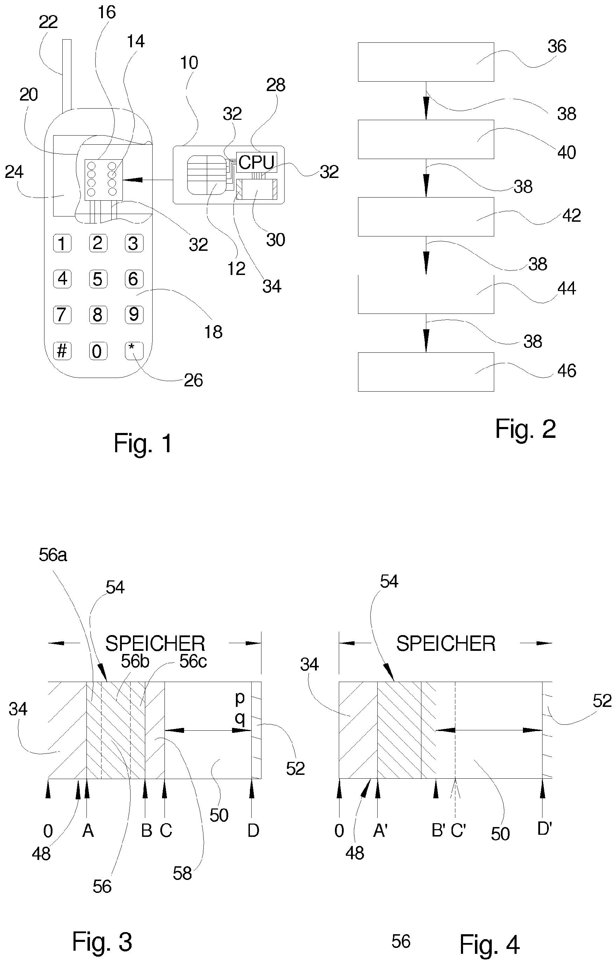

In Fig. 1 wird mit 10 eine erfindungsgemäße Chipkarte bezeichnet. Die Chipkarte 10 verfügt über Kontakte 12, welche mit Kontakten 14 eines Chipkartenlesers 16 in Kontakt stehen. Der Chipkartenleser 16 befindet sich im vorliegenden Ausführungsbeispiel in einem Mobilfunkendgerät 18. Damit der Chipkartenleser 16 sichtbar wird, ist ein Teil 20 aus dem Mobilfunkendgerät 18 "herausgebrochen". Das Mobilfunkendgerät 18 verfügt über eine Sende- und Empfangseinheit 22, eine Anzeige 24 und eine Eingabeeinheit 26, welche als Tastenfeld ausgebildet ist. Mit der Eingabeeinheit 26 kann beispielsweise ein auf der Anzeige 24 dargestelltes Menü gesteuert werden.

Die Chipkarte 10 dient in einem Mobilfunknetz üblicherweise als Identifikations- und Authentifikationsmittel für einen Mobilfunkteilnehmer. Die Chipkarte 10 weist einen Prozessor 28 auf, der auf einen Datenspeicher 30 zugreifen kann. Der Datenspeicher 30 ist vorzugsweise als Chip ausgebildet. Die Chipkarte 10 ist durch den Prozessor 28 mit einer eigenen Rechenkapazität ausgestattet. Der Prozessor 28 verwaltet den Datenspeicher 30 und leitet Daten und Steuerbefehle über die Kontakte 12 bzw. 14 und Daten- und Steuerleitungen 32 an das Mobilfunkendgerät 18 weiter. In dem Datenspeicher 30 ist ein Betriebssystem 34 vorgesehen. Dadurch erhält die Chipkarte 10 eine eigene, von dem Mobilfunkendgerät 18 unabhängige, Daten- und Speicherverwaltung. Ein Speichermanagementsystem, welches insbesondere aus dem Prozessor 28 und dem Betriebssystem 34 gebildet wird, verwaltet den Datenspeicher 30.

Applikationen, welche sowohl in dem Mobilfunkendgerät 18, als auch auf der Chipkarte 10 gespeichert sein können, nutzen den Datenspeicher 30 der Chipkarte 10. Damit die Applikationen den Datenspeicher 30 der Chipkarte 10 nutzen können, müssen Sie wissen, wie die aktuelle Speicherkapazität aussieht. Hierfür startet die Applikation eine Anfrage an das Speichermanagementsystem der Chipkarte 10. Die Applikation übermittelt dazu eine Bedarfsanfrage.

Der Ablauf für die Verwaltung des Datenspeichers 30 auf der Chipkarte 10 wird anhand von Fig. 2 beschrieben. Zunächst ermittelt der Prozessor 28 die vorhandene freie Datenspeicherkapazität des Datenspeichers 30, Kasten 36. Pfeile 38 symbolisieren dabei den jeweils nächsten, folgenden Schritt des Verfahrensablaufs. Wenn feststeht, wie groß der noch zur Verfügung stehende Speicher des Datenspeichers 30 ist, erfolgt eine entsprechende Freigabe für eine Applikation zum Speichern von Daten, Kasten 40. Danach kann die Applikation den Datenspeicher 30 vollständig oder teilweise belegen, um dort Daten abzuspeichern. Entsprechend kann die Applikation natürlich auch Daten aus dem Datenspeicher 30 löschen. Dann wird zusätzlicher Speicher des Datenspeichers 30 frei. Kasten 42 symbolisiert das Belegen und/oder Löschen von Daten in dem Datenspeicher 30. Nun erfolgt eine Anpassung einer Angabe über die tatsächliche freie Speicherplatzmenge, Kasten 44. Die Angabe besteht üblicherweise in einem digitalen Wert, der an einer festen Speicherplatzstelle abgelegt ist. Es ist vorgesehen, den Datenspeicher 30 neu zu ordnen und Applikationen zuzuweisen, Kasten 46. Danach kann das Verfahren bei der nächsten Anfrage einer Applikation von vorne, d.h. von Kasten 36 beginnen. Um zu verhindern, dass der Datenspeicher 30 überläuft, wird die Bedarfsanfrage bzgl. der Speicherkapazität mit der tatsächlich freien Speicherkapazität verglichen. Ist der Bedarf kleiner oder gleich der zur Verfügung stehenden Speicherkapazität, dann kann der Speicher der Applikation zugewiesen werden.

Mit den Fig. 3 und 4 soll die Speicherplatzverwaltung durch den Prozessor 28 beispielhaft beschrieben werden. Der gesamte Datenspeicher 30 der Chipkarte 10 wird mit seiner vollständigen Kapazität in diesen Fig. 3 und 4 dargestellt. Ein nichtflüchtiger Speicherbereich 48 ist für das Betriebssystem 34 reserviert. Das Betriebssystem 34 befindet sich üblicherweise in dem nichtflüchtigen Speicherbereich 48, damit es auch nach dem Ausschalten in dem Speicherbereich 48 erhalten bleibt. Mit 50 wird freier Speicherplatz bezeichnet. Dieser Speicherplatz 50 ist nicht schraffiert dargestellt und steht verschiedenen Anwendungen zur Verfügung. An Speicherstelle 52 wird eine Angabe über den tatsächlichen aktuellen noch freien Speicherplatz 50 abgelegt. Dabei handelt es sich üblicherweise um eine digitale Größenangabe. Schraffierter Speicherbereich 54 ist neben dem Betriebsystem 34 mit Daten 56, 58 belegt. Die Daten 56, 58 können dabei beispielsweise als Programmdaten, oder Daten einer Datenbank, wie Adressdaten, ausgebildet sein.

In Fig. 3 befinden sich die Daten 58 in dem Speicher 30. Fig. 4 weist diese Daten 58 nicht mehr auf. Sie wurden gelöscht. Der belegte 54 bzw. freie Speicherplatz 50 wird symbolisch als Abstand gezeigt, der in der Fig. 3 durch die Größen 0, A, B, C und D, sowie in Fig. 4 durch die Größen 0, A', B' und D' dargestellt wird. Der mit Daten belegte Speicherplatz 54 reicht in Fig. 4 bis C. Das Betriebsystem 34 belegt davon Speicher von 0 bis A. In dem von einer ersten Applikation beanspruchter Speicherbereich A bis B liegen die Daten 56 und in dem Speicherbereich B bis C, der von einer zweiten Applikation beanspruchet wird, liegen die Daten 58. Der freie Speicherplatz 50 wird in Fig. 3 durch den Speicherbereich C bis D definiert. Die Speicherstelle 52 mit der Angabe über den zur Verfügung stehenden freien Speicher liegt in diesem Ausführungsbeispiel hinter dem freien Speicherplatz 50, also hinter D. Eine Anfrage einer Applikation würde ergeben, dass der Speicherplatz 50, also C bis D, zur Verfügung steht.

Werden Daten 58 gelöscht, wie in Fig. 4, dann steht mehr freier Speicherplatz 50 zur Verfügung. Der Speicher B' bis C' ist zum freien Speicherplatz 50 hinzugekommen. Der für Applikationen verfügbare freie Speicherplatz 50 beginnt bei B' und endet bei D'. Die Speicherstelle 52 enthält immer den Wert für den freien Speicherplatz 50. Dieser Wert wird bei jeder Änderung innerhalb des Speichers 30 an die aktuelle Datenbelegung dynamisch angepasst.

Die Speicher- und Datenverwaltung kann den Datenspeicher 30 in Unterbereiche 56a, 56b und 56c unterteilen. Jeder Unterbereich 56a, 56b und 56c kann bei Bedarf wiederum separat verwaltet werden. Dies ermöglicht z.B., dass Applikationen in einem eigenen Speicherbereich ablaufen können, ohne andere Anwendungen in anderen z.B. Speicherbereichen 58 zu tangieren. Auch die Belegung von Unterbereichen 56a, 56b und 56c wird aktuell an der Speicherstelle 52 festgehalten. Auch ein Zugriffs-Status des Datenspeichers 30 und/oder von Unterbereichen 56a, 56b, 56c des Datenspeichers 30 wird in der Speicherstelle 52 des Datenspeichers 30 abgelegt. Dort wird festgehalten, ob eine Applikation überhaupt einen Speicherbereich 54 verwenden darf. Für wenigstens einen Speicherbereich 54 kann z.B. ein "nur Lese-Status" festgelegt werden. So kann der Speicherbereich nur ausgelesen, aber nicht gelöscht oder überschrieben werden.

Damit der Datenspeicher 30 nicht doppelt, d.h. mit Daten 58 desselben Inhalts, belegt wird, sind Platzhalter p, q vorgesehen. Diese stehen einer Applikation zur Verfügung und weisen direkt auf die Daten 58 des Datenspeichers 30. Eine Applikation greift daher auf den Platzhalter p bzw. q zu und wird damit auf die entsprechenden Daten gelenkt, als seien die Daten mehrfach abgespeichert. Dadurch geht die Speicherverwaltung der Chipkarte 10 sparsam mit den Ressourcen, d.h. dem Datenspeicher 30, bei der Zuweisung von Speicherplatz um.

## Patentansprüche

1. Verfahren zum prozessorgesteuerten Verwalten eines Datenspeichers (30) einer Chipkarte (10), insbesondere einer SIM-, USIM-, Bank- oder Gesundheitskarte, mit den Verfahrensschritten:
a) Prüfen (36) der vorhandenen Datenspeicherkapazität des Datenspeichers (30) der Chipkarte (10),
b) Freigabe (40) von Datenspeicher (30) der Chipkarte (10) für eine Applikation zum Speichern von Daten (56, 58),
c) Belegen von Datenspeicher (30) der Chipkarte (10) mit Daten und/oder (42) Löschen von Daten (56, 58) in dem Datenspeicher (30) der Chipkarte (10) durch die Applikation,
d) ein Anpassen (44) einer gespeicherten Angabe über die tatsächliche freie Speicherplatzmenge (50) des Datenspeichers (30) der Chipkarte (10), und
e) ein Neuordnen des Datenspeichers (30) der Chipkarte (10) und ein Zuweisen (46) von freiem Speicherplatz (50) des Datenspeichers (30) der Chipkarte (10) für die Applikation erfolgt,
wobei
zur Verhinderung eines Überlaufs des Datenspeichers (30) eine Bedarfsanfrage bezüglich der Speicherkapazität mit der tatsächlich freien Speicherplatzmenge (50) verglichen wird und, falls der Bedarf kleiner oder gleich der zur Verfügung stehenden Speicherkapazität ist, der Speicher der Applikation zugewiesen werden kann
und
wobei die Angabe bzw. Information über die tatsächlich freie Speicherplatzmenge (50) des Datenspeichers (30) der Chipkarte (10) als Wert an einer fest definierten Speicherstelle (52) des Datenspeichers (30) der Chipkarte (10) abgelegt ist
und wobei
ein Zugriffs-Status des Datenspeichers (30) und/oder von Unterbereichen (56a, 56b, 56c) des Datenspeichers (30) in der fest definierten Speicherstelle (52) des Datenspeichers (30) ablegbar ist, in welcher festgehalten wird, ob die Applikation überhaupt einen Speicherbereich (54) verwenden darf.

2. Verfahren nach Anspruch 1, **dadurch gekennzeichnet, dass** bei nicht ausreichender Speichermenge auf dem Datenspeicher (30) der Chipkarte (10) eine Signalisierung erfolgt.

3. Verfahren nach Anspruch 1 oder Anspruch 2, **dadurch gekennzeichnet, dass** eine Datei, welche durch unterschiedliche Applikationen gleichzeitig genutzt wird, Datenspeicher (58) nur einfach belegt und mit entsprechenden Verknüpfungen (p, q) durch die Applikationen verwendet wird.

4. Verfahren nach einem der Ansprüche 1 bis 3, **dadurch gekennzeichnet, dass** die freie Datenspeicherkapazität (50) des Datenspeichers (30) der Chipkarte (10) zur aktuellen Anzeige dynamisch erfasst wird.

5. Verfahren nach einem der Ansprüche 1 bis 4, **dadurch gekennzeichnet, dass** ein Platzhalter (p, q) für eine Datei vorgesehen ist.

6. Chipkarte (10), insbesondere einer SIM-, USIM-, Bank- oder Gesundheitskarte, enthaltend einen Chip mit einem Datenspeicher (30), wobei der Datenspeicher (30) durch ein prozessorgesteuertes Speichermanagementsystem (28, 34) verwaltet wird, welches Mittel zur Kennzeichnung von benutztem und unbenutztem Datenspeicher (30) und Mittel zur Anzeige der aktuellen freien Datenspeicherkapazität (50) aufweist, wobei ferner
- Mittel zum Anpassen einer Angabe über die tatsächliche freie Speicherplatzmenge (50) des Datenspeichers (30) der Chipkarte (10),
- Mittel zum Neuordnen des Datenspeichers (30) der Chipkarte (10) sowie zum Zuweisen (46) von freiem Datenspeicher (50) der Chipkarte (10) für anfragende Applikationen,
- Mittel zum Feststellen der erforderlichen Speichermenge für eine anfragende Applikation, ob noch ausreichender Datenspeicher zur Verfügung steht,
- Mittel zum Feststellen der vorhandenen freien Speichermenge für die anfragende Applikation,
- Mittel zum Vergleichen, ob der Bedarf bezüglich der Speicherkapazität der anfragenden Applikation kleiner oder gleich der zur Verfügung stehenden Speicherplatzmenge (50) ist,
wobei die Angabe bzw. Information über die tatsächlich freie Speicherplatzmenge (50) des Datenspeichers (30) der Chipkarte (10) als Wert an einer fest definierten Speicherstelle (52) des Datenspeichers (30) der Chipkarte (10) abgelegt ist,
und
- Mittel zum Ablegen eines Zugriffs-Status des Datenspeichers (30) und/oder von Unterbereichen (56a, 56b, 56c) des Datenspeichers (30) in der fest definierten Speicherstelle (52), in welcher festgehalten wird, ob die Applikation überhaupt einen Speicherbereich (54) verwenden darf,
vorgesehen sind.

7. Chipkarte (10) nach Anspruch 6, **dadurch gekennzeichnet, dass** eine Prozessoreinheit (28) auf der Chipkarte (10) für das Speichermanagementsystem (28, 34) vorgesehen ist.

8. Chipkarte (10) nach einem der Ansprüche 6 oder 7, **dadurch gekennzeichnet, dass** ein Betriebssystem (34), welches Anweisungen für das Speichermanagementsystem (28, 34) enthält, im Datenspeicher (30) der Chipkarte (10) vorgesehen ist.

## Claims

1. A method for the processor controlled management of a data storage (30) of a chip card (10), in particular a SIM, USIM, bank or health card, comprising the process steps of:
a) checking (36) the available data storage capacity of the data storage (30) of the chip card (10),
b) releasing (40) the data storage (30) of the chip card (10) for an application for storing data (56, 58),
c) occupying data storage (30) of the chip card (10) with data and/or removing data (56, 58) from the data storage (30) of the chip card (10) by means of the application,
d) adapting (44) stored information about the actually free quantity of storage space (50) of the data storage (30) of the chip card (10), and
e) reorganizing the data storage (30) of the chip card (10) and allocating (46) free storage space (50) of the data storage (30) of the chip card (10) for the application,
wherein
for preventing the data storage (30) from overflowing, a need request with respect to the storage capacity will be compared with the actually free quantity of storage space (50) and if the need is smaller than or equal to the available storage capacity, the storage can be allocated to the application and
wherein the statement or information about the actually free quantity of storage space (50) of the data storage (30) of the chip card (10) is stored as a value at a precisely defined storage position (52) of the data storage (30) of the chip card (10)
and wherein
an access status of the data storage (30) and/or subsections (56a, 56b, 56c) of the data storage (30) can be stored at the precisely defined storage position (52) of the data storage (30), at which position it is recorded whether the application may use a storage area (54) at all.

2. A method according to claim 1, **characterized in that** in case of an insufficient quantity of storage space in the data storage (30) of the chip card (10) there will be a signaling.

3. A method according to claim 1 or claim 2, **characterized in that** a file which is simultaneously used by different applications occupies data storage space (58) only once and is used with corresponding links (p, q) by the applications.

4. A method according to one of the claims 1 to 3, **characterized in that** the free data storage capacity (50) of the data storage (30) of the chip card (10) will be dynamically recorded for being currently displayed.

5. A method according to one of the claims 1 to 4, **characterized in that** a placeholder (p, q) is provided for a file.

6. A chip card (10), in particular a SIM, USIM, bank or health card, containing a chip with a data storage (30), wherein the data storage (30) is managed by a processor controlled storage management system (28, 34) which comprises means for marking used and non-used data storage (30) and means for displaying the actually free data storage capacity (50), wherein furthermore
- means for adapting information about the actually free quantity of storage space (50) of the data storage (30) of the chip card (10),
- means for reorganizing the data storage (30) of the chip card (10) as well as for allocating (46) free storage space (50) of the chip card (10) to requesting applications,
- means for determining the required quantity of storage space for a requesting application and determining whether sufficient data storage space is still available,
- means for determining the available free quantity of storage space for the requesting application,
- means for comparing whether the need with respect to the storage capacity of the requesting application is smaller than or equal to the available quantity of storage space (50),
wherein the statement or information about the actually free quantity of storage space (50) of the data storage (30) of the chip card (10) is stored as a value at a precisely defined storage position (52) of the data storage (30) of the chip card (10),
and
- means for storing an access status of the data storage (30) and/or subsections (56a, 56b, 56c) of the data storage (30) at the precisely defined storage position (52) at which it is recorded whether the application may use a storage area (54) at all,
are provided.

7. A chip card according to claim 6, **characterized in that** a processor unit (28) is provided on the chip card (10) for the storage management system (28, 34).

8. A chip card (10) according to one of the claims 6 or 7, **characterized in that** an operating system (34) which contains instructions for the storage management system (28, 34) is provided in the data storage (30) of the chip card (10).

## Revendications

1. Procédé de gestion commandée par processeur d'une mémoire de données (30) d'une carte à puce (10), notamment d'une carte SIM, d'une carte USIM, d'une carte bancaire ou d'une carte de santé, comprenant les étapes de procédé de:
a) examiner (36) la quantité de mémoire disponible de la mémoire de données (30) de la carte à puce (10),
b) permettre l'accès (40) à la mémoire de données (30) de la carte à puce (10) à une application pour mémoriser des données (56, 58),
c) occuper la mémoire de données (30) de la carte à puce (10) avec des données et/ou effacer des données (56, 58) dans la mémoire de données (30) de la carte à puce (10) par moyen de l'application,
d) adapter (44) une information mémorisée par rapport à la quantité d'espace mémoire effectivement libre (50) de la mémoire de données (30) de la carte à puce (10), et
e) restructurer la mémoire de données (30) de la carte à puce (10) et affecter (46) de l'espace mémoire libre (50) de la mémoire de données (30) de la carte à puce (10) à une application,
dans lequel
pour empêcher un débordement de la mémoire de données (30), une demande de besoin par rapport à la quantité de mémoire est comparée avec l'espace mémoire effectivement libre (50) et si le besoin est inférieur ou égal à la quantité de mémoire disponible, l'espace mémoire pourra être affecté à l'application
et
dans lequel le renseignement ou l'information par rapport à la quantité de mémoire effectivement libre (50) de la mémoire de données (30) de la carte à puce (10) est mémorisé comme une valeur à un emplacement mémoire précisément défini (52) dans la mémoire de données (30) de la carte à puce (10)
et dans lequel
un état de l'accès à la mémoire de données (30) et/ou à des sous-zones (56a, 56b, 56c) de la mémoire de données (30) peut être mémorisé à l'emplacement mémoire précisément défini (52) de la mémoire de données (30), auquel emplacement mémoire il est retenu, si l'application a le droit d'utiliser une zone de mémoire (54).

2. Procédé selon la revendication 1, **caractérisé en ce que** dans le cas où la quantité mémoire dans la mémoire de données (30) de la carte à puce (10) ne suffit pas, une signalisation aura lieu.

3. Procédé selon la revendication 1 ou la revendication 2, **caractérisé en ce qu'**un fichier, qui est simultanément utilisé par des applications différentes, n'occupe de l'espace mémoire de données (58) qu'une seule fois et est utilisé avec des liens correspondants (p, q) par les applications.

4. Procédé selon l'une des revendications 1 à 3, **caractérisé en ce que** la quantité de mémoire libre (50) de la mémoire de données (30) de la carte à puce (10) est saisie de manière dynamique pour l'affichage actuel.

5. Procédé selon l'une des revendications 1 à 4, **caractérisé en ce qu'**une marque de réservation (p, q) est prévue pour un fichier.

6. Carte à puce (10), notamment une carte SIM, une carte USIM, une carte bancaire ou une carte de santé, contenant une puce avec une mémoire de données (30), la mémoire de données (30) étant gérée par un système de gestion commandée par processeur (28, 34), qui comprend des moyens destinés à marquer de la mémoire de données (30) utilisée et non-utilisée et des moyens destinés à afficher la quantité de mémoire effectivement libre (50), et dans laquelle sont en outre prévus :
- des moyens destinés à adapter une information par rapport à la quantité de mémoire effectivement libre (50) de la mémoire de données (30) de la carte à puce (10),
- des moyens destinés à restructurer la mémoire de données (30) de la carte à puce (10) ainsi qu'à attribuer de l'espace mémoire libre (50) de la carte à puce (10) à des applications requérantes,
- des moyens destinés à déterminer la quantité de mémoire nécessaire d'une application requérante et à déterminer s'il y a encore assez de quantité de mémoire,
- des moyens destinés à déterminer la quantité de mémoire libre qui est disponible pour l'application requérante,
- des moyens destinés à comparer si le besoin par rapport à la quantité de mémoire de l'application requérante est inférieur ou égal à l'espace mémoire disponible (50),
dans lequel le renseignement ou l'information par rapport à la quantité de mémoire effectivement libre (50) de la mémoire de données (30) de la carte à puce (10) est mémorisé comme une valeur à un emplacement mémoire précisément défini (52) dans la mémoire de données (30) de la carte à puce (10),
et
- des moyens destinés à mémoriser un état de l'accès à la mémoire de données (30) et/ou à des sous-zones (56a, 56b, 56c) de la mémoire de données (30) à l'emplacement mémoire précisément défini (52), auquel il est retenu, si l'application a le droit d'utiliser une zone de mémoire (54).

7. Carte à puce (10) selon la revendication 6, **caractérisée en ce qu'**une unité de processeur (28) est prévue sur la carte à puce (10) pour le système de gestion de mémoire (28, 34).

8. Carte à puce (10) selon l'une des revendications 6 ou 7, **caractérisée en ce qu'**un système d'exploitation (34), qui contient des instructions pour le système de gestion de mémoire (28, 34), est prévu dans la mémoire de données (30) de la carte à puce (10).
